# EUROPÄISCHE PATENTSCHRIFT

(11) **EP 1 084 354 B1**
(45) Veröffentlichungstag und Bekanntmachung des Hinweises auf die Patenterteilung: **16.06.2004**
(21) Anmeldenummer: 00936606.3
(22) Anmeldetag: 06.04.2000
(51) Int. Cl.: F16F 13/26

(54) **ZWEIKAMMERSTÜTZLAGER**
TWO-CHAMBER SUPPORT BEARING
PALIER DE SUPPORT A DEUX CHAMBRES

(30) Priorität: 07.04.1999 DE 19915480
(43) Veröffentlichungstag der Anmeldung: 21.03.2001
(73) Patentinhaber: ZF Lemförder Metallwaren AG, 49441 Lemförde (DE)
(72) Erfinder: ERSOY, Metin, D-65396 Walluf (DE); JÖRDENS, Ernst-Günter, D-49401 Damme (DE)
(86) Internationale Anmeldenummer: PCT/DE2000/001041
(87) Internationale Veröffentlichungsnummer: WO 2000/060251

(56) Entgegenhaltungen:
- EP-A- 0 622 562
- US-A- 4 805 884
- PATENT ABSTRACTS OF JAPAN vol. 018, no. 534 (M-1685), 11. Oktober 1994 (1994-10-11) & JP 06 185568 A (TOYOTA MOTOR CORP), 5. Juli 1994 (1994-07-05)
- PATENT ABSTRACTS OF JAPAN vol. 1995, no. 06, 31. Juli 1995 (1995-07-31) & JP 07 071515 A (NIPPONDENSO CO LTD;OTHERS: 01), 17. März 1995 (1995-03-17)

## Beschreibung

Die Erfindung betrifft ein Zweikammerstützlager mit hydraulischer Dämpfung nach dem Oberbegriff des Patentanspruches 1.

Aus der EP 0 622 562 A1 geht ein gattungsgemäßes Zweikammerstützlager mit hydraulischer Dämpfung insbesondere für die Motorlagerung von Kraftfahrzeugen hervor, das eine flüssigkeitsgefüllte Arbeitskammer und eine mit dieser durch einen in seinem Querschnitt veränderbaren Düsenkanal verbundene Ausgleichskammer aufweist, wobei die Querschnittsveränderung des Düsenkanals über einen ersten motorischen Stellantrieb erfolgt und die Arbeitskammer mit einer in einer ihrer Wandungen integrierten Beulfeder versehen ist. Die Steifigkeit der Beulfeder ist über einen von dem ersten Stellantrieb unabhängigen zweiten Stellantrieb veränderbar.

Ein weiteres Motorlager ist beispielsweise aus der DE 36 14 161 bekannt. Bei dem in dieser Schrift offenbarten Zweikammerstützlager sind Arbeitskammer und Ausgleichskammer mit Wandungen aus ringförmigen Gummimembranen versehen, die eine in Anpassung an die Betriebsbelastung vorbestimmte Beulcharakteristik aufweisen. Ausgleichskammer und Arbeitskammer sind durch einen Düsenkanal miteinander verbunden, dessen Wände durch korrespondierende einander überdeckende Profile in zwei starren, zueinander verstellbaren Bauteilen gebildet sind, wobei die beiden Bauteile mittels eines schraubbaren Stellgliedes, das koaxial zur Lagerhauptachse und in Axialrichtung festgelegt im Lagergehäuse des Zweikammerstützlagers gelagert und über ein aus dem Gehäuse herausragendes Bauelement betätigbar ist, axial gegeneinander verstellbar sind. Die Verstellung des Düsenkanalquerschnittes erfolgt durch eine Spindel, die im Lagergehäuse frei drehbar gelagert ist, wobei eines der beiden den Düsenkanal bildenden Bauteile zur Axialverstellung mit der Spindel in Gewindeeingriff steht, so dass durch eine Spindeldrehung eine Verkleinerung bzw. Vergrößerung des Düsenkanalquerschnittes herbeigeführt werden kann.

Durch die ausschließlich manuelle Verstellbarkeit des Zweikammerstützlagers mit Hilfe des aus dem Gehäuse herausragenden Bauelementes ist zwar eine gewisse Anpassung des Zweikammerstützlagers an die baulichen Erfordernisse des durch das Lager schwingungsmäßig zu dämpfenden Motors möglich, eine Anpassung während des laufenden Betriebes scheidet jedoch aufgrund der bestehenden Einbauverhältnisse aus.

Darüber hinaus ist bei dem in der oben angeführten DE-A-3 614 161 offenbarten Zweikammerstützlager eine aufgrund unterschiedlicher Betriebszustände wünschenswerten zusätzliche Versteifung des zur Schwingungsdämpfung dienenden Flüssigkeitsposters in der Arbeitskammer nicht möglich. Gerade die Kombination einer Beeinflussung sowohl des Düsenquerschnittes als auch des Dämpfungsvermögens des hydraulischen Polsters innerhalb der Arbeitskammer würde jedoch eine weitaus bessere Anpassung des Zweikammerstützlagers an die unterschiedlichen Betriebsverhältnisse der innerhalb von Kraftfahrzeugen zu lagernden Motoren ermöglichen. Eine derartige Anpassung ist insbesondere bei Verwendung heute häufig eingesetzter Diesel-Direkteinspritzmotoren gefordert, deren Schwingungsverhalten in weitaus stärkerem Maße durch unterschiedliche Leerlauf- und Fahrschwingverhalten mit unterschiedlichen Schwingungsfrequenzen und Amplituden geprägt als dies bei den bislang eingesetzten Benzin- und Dieselmotoren der Fall ist.

Bei dem im Stand der Technik bekannten Zweikammerstützlager führt ein Vergrößern des Kanalquerschnittes zu einer Erhöhung der Dämpfung des Lagers, ohne die Frequenzlage oder die dynamische Steifigkeit von letzterem zu ändern. Diese Dämpfungserhöhung ist durchaus wichtig für die Eliminierung niederfrequenter Hochamplitudenschwingungen.

Die außerdem auftretenden hochfrequenten Schwingungen mit kleinen Amplituden lassen sich jedoch wirkungsvoll nur durch eine Steifigkeitsänderung der ringförmigen Gummimembran bzw. des damit zusammenwirkenden Flüssigkeitspolsters bekämpfen.

Ausgehend von diesem Stand der Technik ermöglicht die EP-A-622 562 eine Veränderung der Dämpfungscharakteristik während des Betriebszustandes , wobei sowohl niederfrequente Schwingungen mit großer Amplitude als auch Schwingungen höherer Frequenz mit entsprechend kleiner Amplitude wirkungsvoll gedämpft werden. Diese Gestaltung ermöglicht eine schnelle und zuverlässige Anpassung eines Zweikammerstützlagers an die unterschiedlichen Betriebsbedingungen eines Kraftfahrzeuges. Sowohl auftretende Schwingungen hoher Frequenz mit niedriger Amplitude als auch niedrigfrequente Schwingungen mit entsprechend größerer Amplitude lassen sich durch die Verwendung der Stellantriebe und die daraus resultierende Veränderung der Dämpfungscharakteristik wirkungsvoll eliminieren. Ein weiterer Vorteil besteht darin, dass erstmals sowohl der Düsenquerschnitt als auch gleichzeitig die Dämpfungscharakteristik des Hydraulikpolsters veränderbar ist. Beim Einbau eines derartigen Zweikammerstützlagers ergibt sich als weiterer Vorteil, dass außer elektrischen Zuleitungen für die Stellantriebe keine weiteren speziellen Anschlüsse vorzustehen sind.

Die Aufgabe der vorliegenden Erfindung besteht darin, das gattungsgemäße Zweikammerstützlager bezüglich des Einbauraumes kompakt zu gestalten und unter allen Betriebsbedingungen eine zuverlässige Arbeitsweise zu gewährleisten.

Diese Aufgabe wird erfindungsgemäß dadurch gelöst, dass bei einem gattungsgemäßen Zweikammerstützlager nach dem Oberbegriff des Patentanspruches 1 beide Stellantriebe in der Hauptachsrichtung des Lagers koaxial übereinander angeordnet sind.

Spezielle Ausgestaltungen des Gegenstandes der Erfindung ergeben sich in Verbindung mit der technischen Lehre des Anspruches 1 aus den Merkmalen der Unteransprüche.

Es hat sich insbesondere als zweckmäßig erwiesen, wenn beide Stellantriebe als elektromotorisch angetriebene Gewindespindeln ausgebildete Betätigungsglieder aufweisen. Eine der Gewindespindeln ist hierbei als mit einer zentralen Durchgangsbohrung versehene Hohlspindel gestaltet, in deren Durchgangsbohrung die andere Gewindespindel angeordnet ist. Diese konstruktive Gestaltung gewährleistet einen besonders platzsparenden Aufbau der Stellantriebe und ermöglicht eine vollkommen unabhängige gleichzeitige oder getrennte Steuerung sowohl des Düsenkanalquerschnittes als auch der Hydraulikpolster-Dämpfungseigenschaften.

Die Verwendung elektrischer Schrittmotoren als Stellantriebe bietet eine besonders feinfühlige Veränderung der Einstellparameter, wobei gleichzeitig keine Abstriche bei der Kompaktheit der Bauweise gemacht werden müssen.

Ein weiterer wesentlicher Vorteil der Erfindung ergibt sich durch eine Ausgestaltung, bei der der Düsenkanal zwischen Arbeits- und Ausgleichskammer in einer senkrecht zur Lagerhauptachse liegenden Ebene spiralförmig um diese Lagerhauptachse verläuft. Durch diese Bauweise ist ein sanfter Übergang zwischen dem in die Arbeitskammer mündenden Kanaleintritt und dem in die Ausgleichskammer mündenden Kanalaustritt gewährleistet, was einen turbolenzfreien Ein- und Austritt der Flüssigkeit zuläßt, aber insbesondere auch für die Lebensdauer der den unteren Abschluß der Arbeitskammer bildenden und in den Kanalquerschnitt hineinragenden Abschlußmembran von Vorteil ist.

Im folgenden wird ein Ausführungsbeispiel des Gegenstandes der Erfindung anhand der beigefügten Zeichnungen näher erläutert werden.

Es zeigt:
- Figur 1: eine Längsschnittdarstellung durch ein erfindungsgemäßes Zweikammerstützlager, wobei die Betriebssituation mit Einstellung eines kleinen Kanalquerschnittes und hoher Steifigkeit des Hydraulikpolsters dargestellt ist,
- Figur 2: eine Schnittdarstellung entsprechend der Figur 1, wobei hier großer Düsenkanalquerschnitt und eine niedrige Steifigkeit des Hydraulikpolsters durch die Stellantriebe eingestellt sind und
- Figur 3: eine Schnittdarstellung entsprechend der Linie B-B aus Figur 1 in Höhe des Düsenkanales.

Das Ausführungsbeispiel zeigt ein Zweikammerstützlager mit hydraulischer Dämpfung, insbesondere ein Motorlager in Kraftfahrzeugen, welches eine mit Flüssigkeit gefüllte Arbeitskammer 1, eine konzentrisch außen koaxial um die Arbeitskammer 1 liegende Ausgleichskammer 2 und eine die beiden Kammern trennende ringförmige Gummiwandung 3 aufweist. Zur Außenseite des Zweikammerstützlagers ist die Ausgleichskammer 2 durch eine weitere Gummimembran 4 abgeschlossen. Die beiden Gummiteile 3 und 4 sind einstückig ausgeführt und mit einem oberen zentral angeordneten Tragelement 5 festhaftend verbunden, welches am Motor oder an einem anderen abzustützenden Teil befestigbar ist. Die die Wandung der Arbeitskammer 1 bildende Gummiwandung 3 ist mit ihrem dem Tragelement 5 abgewandten unteren freien Ende mit einem Bauteil 6 verbunden, in welchem der Düsenkanal 8 eingearbeitet ist und das mit einem ringförmigen Bodenteil verschraubt ist. Das Bodenteil 7 ist topfförmig ausgebildet und weist eine Bodenplatte 9 auf, die zur Befestigung an einer karosserieseitigen Aufnahme ausgebildet ist. In den im Bauteil 6 als spiralförmige Ausnehmung eingebrachten Düsenkanal 8 ragt von der Bodenseite her ein Stempelbauteil 10 ein, welches an seiner der Bodenplatte 9 abgewandten Oberseite eine entsprechend dem Düsenkanal 8 in seiner spiralförmigen Gestalt ausgebildeten Vorsprung 11 aufweist. Das Stempelbauteil 10 ist mit einer zentralen Bohrung versehen, in welcher eine Hohlspindel 12 festgeschraubt ist. Die Hohlspindel 12 ist Bestandteil eines ersten Stellantriebes 20, dessen Drehbewegung ein Aus- und Einfahren der Hohlspindel 12 und daraus resultierend, ein lineares Ein- und Ausfahren des Stempelbauteiles 10 in den Düsenkanal 8 bewirkt.

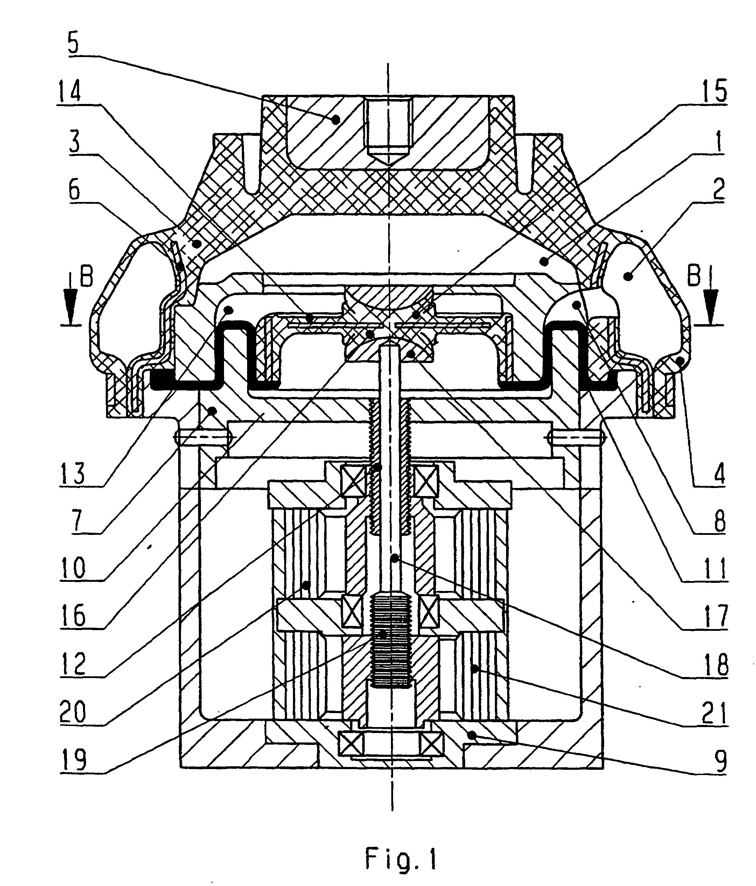

Der in das Bauteil 6 eingearbeitete Düsenkanal 8 ist gegen das Stempelbauteil 10 durch eine Membran 13 abgedichtet. Diese Membran 13 bildet gleichzeitig den unteren Abschluß der Arbeitskammer 1 und ist mit einer einstückig mit der Membran versehenen Beulfeder 14 versteift. Die Beulfeder 14 besteht aus einer Blechscheibe, wobei oberhalb und unterhalb der zentral in die Membran eingearbeiteten Beulfeder 14 zwei Vorsprünge 15 und 16 einstückig an der Membran 13 angeordnet sind. Der außerhalb der Arbeitskammer 1 liegenden Vorsprung 16 ist, wie dies in der Figur 1 verdeutlicht ist, durch eine Druckplatte 17 zusammendrückbar. Die Druckplatte 17 ist fest mit einer Gewindespindel 18 verbunden, welche Bestandteil eines zweiten Stellantriebes 21 ist und durch eine zentrale Durchgangsbohrung 19 der Hohlspindel 12 hindurchgeführt ist. Eine Drehung des Stellantriebes 21 bewirkt ein Aus- und Einfahren der Gewindespindel 18 aus dem Stellantrieb, wobei, wie aus Figur 1 ersichtlich ist, ein Ausfahren der Gewindespindel eine Druckbeaufschlagung und somit eine Versteifung der Beulfeder 14 durch die Druckplatte 17 bewirkt.

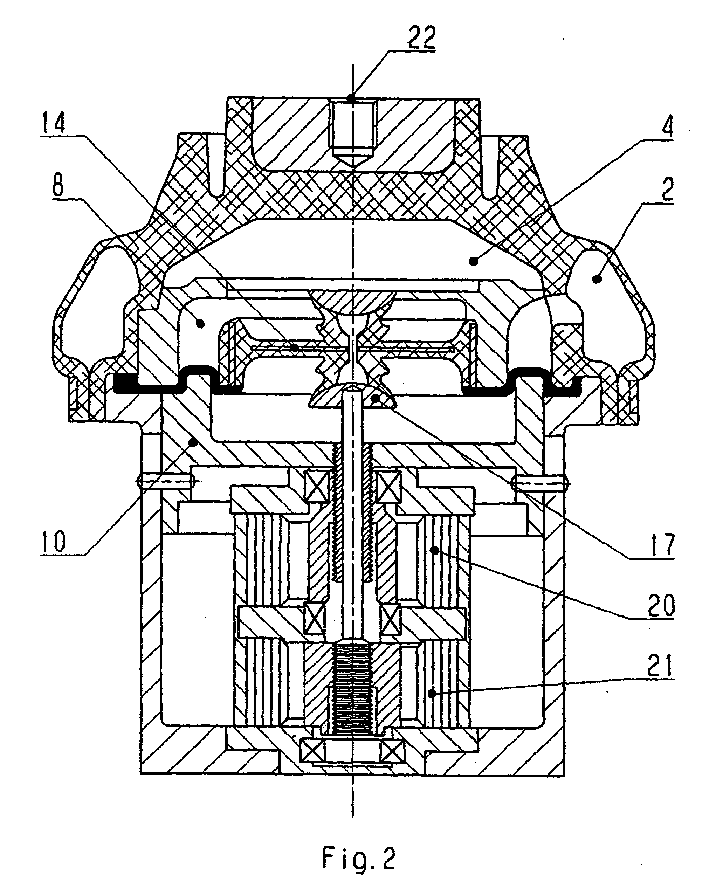

In Figur 2 sind im Gegensatz zu Figur 1 diejenigen Stellungen der Schrittmotoren 20 und 21 dargestellt, in der zum einen die Druckplatte 17 keine Druckkraft auf die Beulfeder 14 ausübt und darüber hinaus das Stempelbauteil 10 nicht in den Düsenkanal 8 des Bauteiles 6 eingefahren ist. Beide Figuren veranschaulichen somit die gegensätzlichen Endstellungen sowohl des Stempelbauteiles 10 als auch der Druckplatte 17, wobei selbstverständlich die Einzelansteuerung der Stellantriebe 20 und 21 beliebige Zwischenstellungen des Stempelbauteiles 10 und der Druckplatte 17 unabhängig voneinander ermöglichen. Die unterschiedlichen Stellungen bedingen unterschiedliche Düsenquerschnitte des Düsenkanales 8 und der Steifigkeit der Beulfeder 14, so daß das erfindungsgemäße Zweikammerstützlager je nach geforderter Dämpfungscharakteristik allen Betriebsbedingungen optimal angepaßt werden kann.

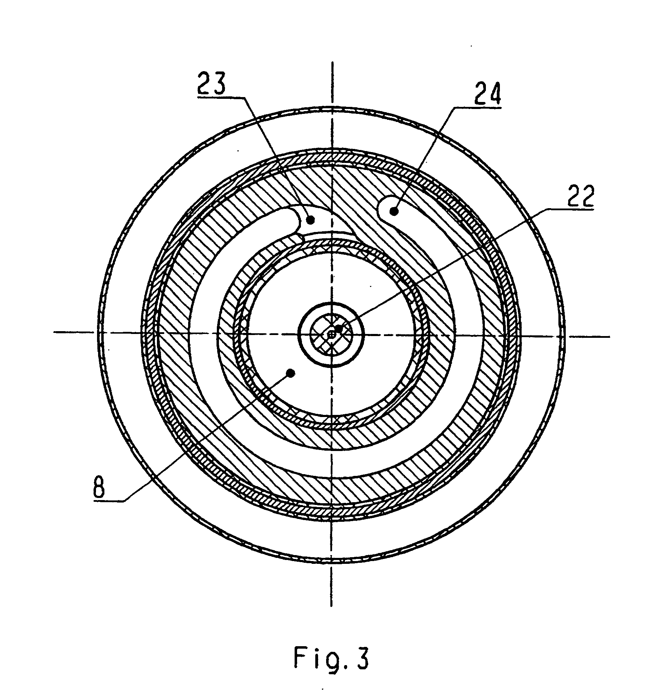

In der Schnittdarstellung der Figur 3 ist deutlich zu erkennen, daß der in das Bauteil 6 eingebrachte Düsenkanal 8 eine spiralförmig um die Lagerhauptachse 23 verlaufende Gestalt aufweist. Durch diesen Aufbau liegen der in die Arbeitskammer 1 mündende Einlaß 23 des Düsenkanales 8 und der zur Ausgleichskammer 2 weisende Auslaß 24 des Düsenkanales 8 versetzt zueinander.

Diese durch die spiralförmige Gestaltung des Düsenkanals 8 bedingte Versetzung wirkt sich außerordentlich positiv auf die Lebensdauer der den Düsenkanal abdichtenden Membran 13 aus, da diese insbesondere im Bereich der Ein- und Austritte nicht über Gebühr beansprucht wird.

Die in den Figuren 1 und 2 dargestellten Stellantriebe 20 und 21 sind als elektrische Schrittmotoren konzipiert, die einerseits eine äußerst kompakte Bauweise gewährleisten und andererseits ein feinfühliges und programmierbares Aus- und Einfahren sowohl der Gewindespindel 18 als auch der Hohlspindel 12 gewährleisten, so daß sich die Gesamtdämpfungscharakteristik des erfindungsgemäßen Zweikammerstützlagers in weiten Bereichen genauestens an eine geforderte Dämpfungscharakteristik anpassen läßt.

Die Steuerung der Stellantriebe läßt sich mit Hilfe von Kennlinien einfach und kostengünstig regeln, wobei die verwendeten elektrischen Schrittmotoren hohe Stellgeschwindigkeiten im Bereich größer als 100 mm pro Sekunde realisieren können.

### Bezugszeichenliste:

- 1.: Arbeitskammer
- 2.: Ausgleichskammer
- 3.: Gummiwandung
- 4.: Gummimembran
- 5.: Tragelement
- 6.: Bauteil
- 7.: Bodenteil
- 8.: Düsenkanal
- 9.: Bodenplatte
- 10.: Stempelbauteil
- 11.: Vorsprung
- 12.: Hohlspindel
- 13.: Membran
- 14.: Beulfeder
- 15.: Vorsprung
- 16.: Vorsprung
- 17.: Druckplatte
- 18.: Gewindespindel
- 19.: Durchgangsbohrung
- 20.: Stellantrieb I
- 21.: Stellantrieb II
- 22.: Lagerhauptachse
- 23.: Einlaß
- 24.: Auslaß

## Patentansprüche

1. Zweikammerstützlager mit hydraulischer Dämpfung insbesondere für die Motorlagerung von Kraftfahrzeugen, welches mindestens eine flüssigkeitsgefüllte Arbeitskammer (1) und mindestens eine mit dieser durch einen in seinem Querschnitt veränderbaren Düsenkanal (8) verbundene Ausgleichskammer (2) aufweist, wobei die Querschnittsveränderung des Düsenkanals (8) über einen ersten motorischen Stellantrieb (20) erfolgt und die Arbeitskammer (1) mit einer in einer ihrer Wandungen integrierten Beulfeder (14) versehen ist, deren Steifigkeit über einen vom ersten Stellantrieb (20) unabhängigen zweiten motorischen Stellantrieb (21) veränderbar ist,
**dadurch gekennzeichnet, dass**
beide Stellantriebe (20, 21) in der Hauptachsrichtung (22) des Lagers koaxial übereinander angeordnet sind.

2. Zweikammerstützlager mit hydraulischer Dämpfung nach Anspruch 1,
**dadurch gekennzeichnet, dass**
beide Stellantriebe (20, 21) als elektromotorisch angetriebene Gewindespindeln (12, 18) ausgebildete Betätigungsglieder aufweisen, wobei eine der Gewindespindeln (12) als mit einer zentralen Durchgangsbohrung (19) versehene Hohlspindel gestaltet ist, in deren Durchgangsbohrung die andere Gewindespindel (18) angeordnet ist.

3. Zweikammerstützlager mit hydraulischer Dämpfung nach einem oder mehreren der Ansprüche 1 bis 2,
**dadurch gekennzeichnet, dass**
als Stellantriebe (20, 21) elektrische Schrittmotoren vorgesehen sind.

4. Zweikammerstützlager mit hydraulischer Dämpfung nach einem oder mehreren der Ansprüche 1 bis 3,
**dadurch gekennzeichnet, dass**
der Düsenkanal (8) zwischen Arbeitskammer (1) und Ausgleichskammer (2) in einer senkrecht zur Lagerhauptachse (22) liegenden Ebene spiralförmig um diese Lagerhauptachse verlaufend gestaltet ist.

## Claims

1. Dual-chamber support bearing with hydraulic damping, in particular for the engine mounting of motor vehicles, which comprises at least one fluid-filled working chamber (1) and at least one compensating chamber (2) which is connected to the latter by a nozzle channel (8) of a variable cross section, wherein the cross section of the nozzle channel (8) is varied by a first motorized actuating drive (20) and the working chamber (1) is provided with a buckling spring (14) which is integrated into one of its walls and the stiffness of which can be varied by a second motorized actuating drive (21) which is independent of the first actuating drive (20),
**characterised in that**
the two actuating drives (20, 21) are disposed coaxially one above the other in the direction (22) of the major axis of the bearing.

2. Dual-chamber support bearing with hydraulic damping according to Claim 1,
**characterised in that**
the two actuating drives (20, 21) comprise operating members formed as electric motor-driven threaded spindles (12, 18), wherein one of the threaded spindles (12) is configured as a hollow spindle which is provided with a central through-bore (19) and in the through-bore of which the other threaded spindle (18) is disposed.

3. Dual-chamber support bearing with hydraulic damping according to one or both of Claims 1 to 2,
**characterised in that**
electric stepping motors are provided as actuating drives (20, 21).

4. Dual-chamber support bearing with hydraulic damping according to one or more of Claims 1 to 3,
**characterised in that**
the nozzle channel (8) between the working chamber (1) and the compensating chamber (2) is configured so as to extend in the shape of a spiral in a plane lying perpendicular to the major axis (22) of the bearing about this major axis.

## Revendications

1. Palier de support à deux chambres avec amortissement hydraulique en particulier pour la fixation du moteur de véhicules automobiles, qui présente au moins une chambre de travail (1) remplie de liquide et au moins une chambre de compensation (2) reliée à cette chambre de travail par un canal d'injecteurs (8) pouvant être modifié dans sa section, la variation de section du canal d'injecteurs (8) s'effectuant au moyen d'un premier mécanisme de commande (20) à moteur et la chambre de travail (1) étant pourvue d'un ressort de déformation (14) intégré dans l'une des ses parois, dont la rigidité peut être modifiée au moyen d'un deuxième mécanisme de commande (21) à moteur indépendant du premier mécanisme de commande (20),
**caractérisé en ce que**
les deux mécanismes de commande (20, 21) sont disposés dans la direction de l'axe principal (22) du palier de façon coaxiale l'un au-dessus de l'autre.

2. Palier de support à deux chambres avec amortissement hydraulique selon la revendication 1,
**caractérisé en ce que**
les deux mécanismes de commande (20, 21) présentent des organes d'actionnement conçus comme des broches filetées (12, 18) entraînées par un moteur électrique, l'une des broches filetées (12) étant conçue comme une broche creuse pourvue d'un alésage de passage (19) central, dans l'alésage de passage de laquelle est disposée l'autre broche filetée (18).

3. Palier de support à deux chambres avec amortissement hydraulique selon l'une quelconque ou plusieurs des revendications 1 à 2,
**caractérisé en ce que**
des moteurs pas à pas électriques sont prévus comme mécanismes de commande (20, 21).

4. Palier de support à deux chambres avec amortissement hydraulique selon l'une quelconque ou plusieurs des revendications 1 à 3,
**caractérisé en ce que**
le canal d'injecteurs (8) est conçu entre la chambre de travail (1) et la chambre de compensation (2) agencé dans un plan perpendiculaire à l'axe principal de palier (22) et en forme de spirale autour de cet axe principal de palier.
